Europäisches Patentamt

(19) European Patent Office

Office européen des brevets

(11) Veröffentlichungsnummer: **0 161 401**
**B1**

(12) **EUROPÄISCHE PATENTSCHRIFT**

(45) Veröffentlichungstag der Patentschrift:
02.11.88

(51) Int. Cl.⁴: **G 09 B 21/00**

(21) Anmeldenummer: **85101990.1**

(22) Anmeldetag: **22.02.85**

(54) **Taktiles Blindenschrift- bzw. Bilddisplay.**

(30) Priorität: **30.03.84 AT 1095/84**

(43) Veröffentlichungstag der Anmeldung:
**21.11.85 Patentblatt 85/47**

(45) Bekanntmachung des Hinweises auf die Patenterteilung:
**02.11.88 Patentblatt 88/44**

(84) Benannte Vertragsstaaten:
**AT BE CH DE FR GB IT LI NL SE**

(56) Entgegenhaltungen:
**DE-A-2 754 224**
**US-A-3 736 672**
**US-A-3 987 438**

(73) Patentinhaber: **Siemens Aktiengesellschaft Berlin und München, Wittelsbacherplatz 2, D-8000 München 2 (DE)**

(72) Erfinder: **Chlumsky, Lubomir, Illekgasse 8/11, A-1150 Wien (AT)**

## Beschreibung

Die Erfindung betrifft ein Blindenschrift-Ausgabegerät mit einem flächenhaften Darstellungsträger mit erhabenen Rasterpunkten, die von selektiv durch Öffnungen in der Oberfläche des Darstellungsträgers hindurchragenden Kugelkalotten gebildet werden.

Die Blindenschrift nach Braille besteht aus einer Kombination aus 6 bzw. 8 unter- bzw. nebeneinander angeordneten tastbaren Rasterpunkten, wobei zudem noch durch eine unterschiedliche Rasterpunktentfernung eine Rasterkennzeichnung erfolgt. Für Blindenschrift-Ausgabegeräte mit Tastknöpfen eignet sich das "Marburger System groß" mit einem Braille-Raster von 2,7 mm.

Es sind elektromagnetisch betätigbare Ausgabegeräte für Blindenschrift bekannt, die mit einem Tableau versehen sind, das ein Lochraster mit der Grundstruktur der Blindenschriftzeichen aufweist. In diesen Löchern befinden sich Stifte, die einzeln mittels Elektromagnete nach oben bewegt werden können, derart, daß die nach außen ragenden Stifte in ihrer Gesamtheit die Blindenschriftzeichen repräsentieren. Bei einer dieser bekannten Ausführungen sind die nach außen ragenden Enden der Stifte als Kugelkalotten ausgebildet. Alle diese bekannten Ausführungen von Lesegeräten dienen der Präsentation eines Textes in einem Umfang, der durch die Größe des Darstellungsfeldes bestimmt ist. Wenn mit Hilfe solcher Geräte ein längerer Text in tastbarer Form dargestellt werden soll, muß dieser in Abschnitte entsprechend der Größe des Aufzeichnungsfeldes unterteilt, abgespeichert und dieser Speicherinhalt in elektrische Signale umgesetzt werden.

In der US-A-3 987 438 ist ein Blindenschrift-Ausgabegerät beschrieben bei dem für jeden Tastknopf zwei Magnete vorgesehen sind, die zumindest in Achsrichtung untereinander angeordnet sind, und von denen wenigstens einer als Elektromagnet ausgebildet ist. Die Magnete erzeugen durch elektrische Erregung eine Kraft in der Achsenrichtung des Tastknopfes. Diese Kraft hebt oder senkt den Tastknopf mittels einer Magnetspule gemäß der Erregungsrichtung. Für jeden Tastknopf ist eine mechanische, magnetisch steuerbare Verriegelungseinrichtung vorgesehen, die nur auf den Tastknopf einwirkt. Nachteilig ist hier der mechanische Bauteilaufwand für eine Vielzahl von Knöpfen bei Anwendung für ein Bilddisplay (Siehe auch DE-A-2 754 224).

Der Erfindung liegt die Aufgabe zugrunde ein Blindenschrift-Ausgabegerät mit einem flächenhaften Darstellungsträger zu finden, das sowohl eine mehrzeilige Blindenschriftdarstellung als auch eine Bilddarstellung in Form einer Matrix erlaubt, wobei zudem eine Kopierfähigkeit der Darstellung möglich sein soll, und das zudem eine Editierzeile für Programmier- und Abfragezwecke enthält, wobei ein geringer Bauteileaufwand angestrebt wird.

Diese Aufgabe wird erfindungsgemäß dadurch gelöst, daß in den flächenhaften Darstellungsträger matrixförmig verteilt in schachtförmigen Vertiefungen und dort selektiv verschiebbar als Tastelemente für die Rasterpunkte dienende erste Kugeln unverlierbar eingebettet sind und die schachtförmigen Vertiefungen unterseitig mit je einer kammerförmigen Erweiterung für die Aufnahme je einer weiteren als Stellelement für jede erste Kugel dienende zweite Kugel aus weichmagnetischem Material vorgesehen sind, wobei die kammerförmigen Erweiterungen für stabile Lagen der zweiten Kugeln bei angehobener sowie abgesenkter erster Kugel ausgebildet sind, daß für jede zweite Kugel eine Stelleinrichtung und für alle zweiten Kugeln einer Matrixzeile eine Rückstelleinrichtung vorgesehen ist, daß als Stelleinrichtung unterhalb des flächenhaften Darstellungsträgers samt den schacht- und kammerförmigen Kugelaufnahmeräumen mindestens eine in Matrixspaltenrichtung verschiebbare Schlitteneinrichtung, bestückt mit je einem Einzelelektromagneten pro Zeilenelement, für mindestens eine Matrixzeile vorgesehen ist, und daß die jeweilige Steuerung der als Stellelement dienenden zweiten Kugel vom einen Pol eines korrespondierenden Einzelelektromagneten aus über jeweils eine als Polschuh ausgebildete Magnetbrücke erfolgt. Vorteilhaft ist hier die Möglichkeit einer mehrzeiligen Blindenschrift-sowie einer Bilddarstellung bei geringem Aufwand an Bauteilen, wobei zudem durch eine elektronische Ansteuerung ein dem Tastvermögen angemessener rascher Darstellungswechsel möglich ist. Vorteilhaft ist zudem durch die Verriegelung der Kugeln in stabiler nichtfedernder Lage und durch eine Aufwalzung von Folien auf die Darstellungsträgerfläche die Erstellung von Kopien mittels einer die Darstellungsfläche überstreichenden Schlitteneinrichtung.

Nach einem vorteilhaften Merkmal der Erfindung ist vorgesehen, daß die als Polschuh ausgebildete Magnetbrücke beweglich gelagert ist. Vorteilhaft ist hier die Kraftverstärkung durch Verkürzung der Feldlinien.

Nach einem weiteren vorteilhaften Merkmal der Erfindung ist vorgesehen, daß als Schlittenantrieb ein Schrittmotor mit Zahnriemen dient. Vorteilhaft ist hier die in der Geschwindigkeit steuerbare Setzung von Schriftzeilen bzw. von der ganzen Bilddarstellung.

Nach einem zusätzlichen vorteilhaften Merkmal der Erfindung ist vorgesehen, daß als Rückstelleinrichtung ein kammartiger Schieber vorgesehen ist, mit dem die als Stellelement dienenden zweiten Kugeln einer Matrixzeile mittels eines Hubmagnetes rückstellbar sind. Vorteilhaft ist hier die rasche Zeilenlöschung bei geringam Energieaufwand.

Nach einem zusätzlichen weiteren vorteilhaften Merkmal der Erfindung ist vorgesehen, daß auf dem flächenhaften Darstellungsträger durch einen Zwischenraum oder durch eine Tastleiste getrennt eine Editierzeile vorgesehen ist, deren Tastelemente über die gemeinsame Schlitteneinrichtung steuerbar sind. Vorteilhaft ist hier die Möglichkeit, daß der Blinde mit dem Schrift- bzw. Bilddisplay in Korrespondenz treten kann.

Nach weiteren vorteilhaften Merkmalen der Erfindung ist vorgesehen, daß für die Editierzeile eine fest angekoppelte Einzelelektromagnetzeile vorgesehen ist, und daß als Editierzeile im Sinne der Blindenschrift mehrere Matrixzeilen Verwendung finden. Vorteilhaft ist hier der unabhängige Zugriff zur Editierzeile und die einfache Umstellung einer 6-Punkt- auf eine 8-Punkt-Rasterschrift, sowie die Darstellung einer Kurve im Zusammenhang mit dem Bilddisplay.

Nach einer weiteren vorteilhaften Ausgestaltung der Erfindung ist vorgesehen, daß mindestens eine Führungsschiene für die Schlitteneinrichtung zur Schließung des magnetischen Kreises dient. Vorteilhaft ist hier der günstige Kraftschluß.

Nach einer zusätzlichen vorteilhaften Ausgestaltung der Erfindung ist vorgesehen, daß die steuernden Einzelelektromagnete in der Schlitteneinrichtung für eine Rasteränderung einsteckbar ausgeführt sind. Vorteilhaft ist hier die große Variationsmöglichkeit.

Nach einer weiteren zusätzlichen vorteilhaften Ausgestaltung der Erfindung ist vorgesehen, daß Stellglied und Rückstellglied in ihrer Funktion vertauschbar sind, wobei durch den kammartigen Schieber ein Setzen aller und durch die Einzelelektromagnete ein Rücksetzen der schrift- bzw. bildbedingten ersten Kugeln erfolgt. Vorteilhaft ist es hier bei schrift- oder bildbedingter Setzung einer überwiegenden Anzahl von Tastelementen alle Tastelemente zu setzen und eine entsprechend geringe Anzahl von Tastelementen rückzusetzen, wobei auch Energieprobleme zu berücksichtigen sind. Ausführungsbedingt kann es zudem kraftbedingt günstiger sein alle Tastelemente mit einem starken Hubmagnet zu setzen und mit schwächeren Einzelelektromagneten rückzusetzen.

Ein Ausführungsbeispiel der Erfindung ist in der Zeichnung dargestellt und wird im folgenden näher beschrieben. Es zeigen

Fig. 1 eine schematische Darstellung eines Blindenschrift-Ausgabegerätes,
Fig. 2 eine Detailansicht einer Stell- und Rückstelleinrichtung im Schnitt,
Fig. 3 eine Detailansicht mit gesetztem Tastkopf im Schnitt,
Fig. 4 eine Detailansicht einer anderen Stell- und Rückstelleinrichtung im Schnitt.

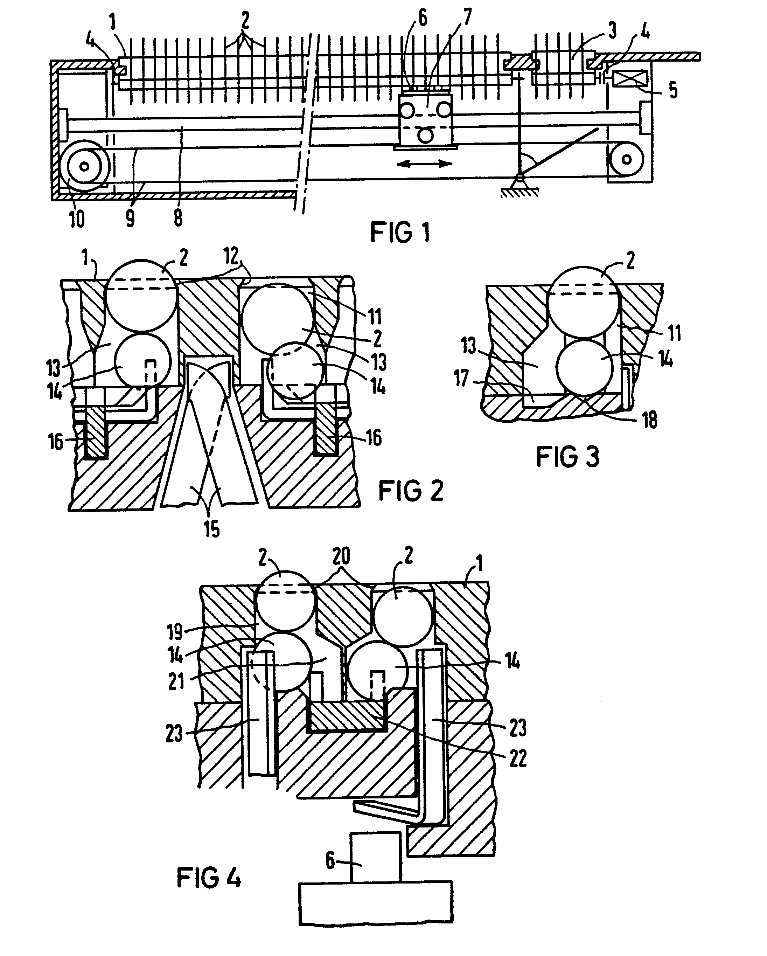

In der Fig. 1 ist eine beispielhafte schematische Darstellung eines Blindschrift-Ausgabegerätes gezeigt. Nachfolgend werden die einzelnen Positionen aufgezählt und anschließend näher erläutert.

1- flächenhafter Darstellungsträger in Form einer Tastplatte (Matrixfläche),
2 - Tastelemente,
3 - Editierzeile,
4 - kammartiger Schieber,
5 - Hubmagnet,
6 - Einzelelektromagnet,
7 - Schlitteneinrichtung,
8 - Führungsschiene,
9 - Zahnriemen,
10 - Schrittmotor.

Ein flächenhafter Darstellungsträger 1 in Form einer Tastplatte ist mit Löchern für Tastelemente 2 versehen. Abgesetzt vom flächenhaften Darstellungsträger 1 ist eine Editierzeile 3 vorgesehen. Für die Rückstellung der Tastelemente 2 aus der gesetzten Stellung ist ein über eine ganze Matrixspalte reichender kammartiger Schieber 4 unterhalb des flächenhaften Darstellungsträgers 1 dargestellt, der über einen Hubmagnet 5 betätigbar ist. Auf mindestens einer Führungsschiene 8 laufend ist eine Schlitteneinrichtung 7 vorgesehen, die über einen Zahnriemen 9 und einen Schrittmotor 10 unterhalb vom flächenhaften Darstellungsträger 1 in Matrixspaltenrichtung verschiebbar ist.

Die Schlitteneinrichtung 7 trägt an deren Oberseite Einzelelektromagnete 6 die zum Setzen der Tastelemente 2 dienen. Der als rechteckige Tastplatte ausgebildete flächenhafte Darstellungsträger 1 ist matrixförmig in einem Raster ohne Leerzeilen mit Tastelementen 2 bestückt, wobei im speziellen Fall bei einer 6-Punkt-Brailleschrift 15 Zeilen zu je 40 Zeichen vorgesehen sind, das sind also zeilenmäßig 80 und spaltenmäßig 59 Tastelemente.

In der Fig. 2 ist ein Ausschnitt des flächenhaften Darstellungsträgers 1 im Schnitt gezeigt. In einer schachtförmigen Vertiefung 11 ist eine als Rasterpunkt bzw. Tastelement ausgebildete erste Kugel 2 durch einen ringförmigen Kragen 12 am Austreten aus dem flächenhaften Darstellungsträger 1 gehindert. Die schachtförmige Vertiefung 11 ist im unteren Teil mit einer kammerförmigen Erweiterung 13 versehen, die der Aufnahme einer als Stellelement dienenden zweiten Kugel 14 dient, wobei diese zweite Kugel 14 bei gesetztem Tastelement senkrecht unterhalb der ersten Kugel 2 liegt und diese bis zur Ebene H aus dem flächenhaften Darstellungsträger 1 herausragt und wobei die zweite Kugel 14 bei gelöschtem Tastelement seitlich unterhalb der ersten Kugel 2 in die kammerförmige Erweiterung 13 zu liegen kommt und diese bis zur Ebene L unter die Oberfläche des flächenhaften Darstellungsträgers abgesenkt ist. Durch einen Polschuh 15 der seitlich in die kammerförmige Erweiterung 13 eingelassen ist wird beim Setzen des Tastelementes die zweite Kugel 14 angezogen und kommt senkrecht unterhalb der ersten Kugel 2 zu liegen. Der Polschuh 15 bekommt seine Erregung über einen Einzelelektromagnet 6 (Fig.1) in der Schlitteneinrichtung 7.

Die Löschung des Tastelementes bzw. der ersten Kugel 2 erfolgt durch Verschieben der zweiten Kugel 14 mittels eines kammförmigen Schiebers 16 in die kammerförmige Erweiterung 13, wobei die Auslösung durch den Hubmagnet 5 (Fig. 1) erfolgt; die erste Kugel 2 gleitet zufolge der Schwerkraft in die schachtförmige Vertiefung 11.

In der Fig. 3 ist die erste Kugel 2 und die zweite Kugel 14 in der schachtförmigen Vertiefung 11 bzw. der kammerförmigen Erweiterung 13 dargestellt. Für die beiden stabilen Lagen der zweiten Kugel 14 ist zum einen eine Absenkung in der kammerförmigen Erweiterung 13 (für die gelöschte Information) und eine kegelförmige Vertiefung 18 senkrecht unterhalb der ersten Kugel (für die gesetzte Information) vorgesehen. Aufgrund dieser möglichen starren Verriegelung kann der gesetzte Informationsinhalt einfach, z. B. mittels Gummiwalze auf Papier oder Folie vom flächenhaften Darstellungsträger abgenommen werden.

In der Fig. 4 ist ein Ausschnitt des flächenhaften Darstellungsträgers 1 im Schnitt gezeigt. In einer schachtförmigen Vertiefung 19 ist eine als Rasterpunkt bzw. Tastelement ausgebildete erste Kugel 2 durch einen ringförmigen Kragen 20 am Austreten aus dem flächenhaften Darstellungsträger 1 gehindert. Die schachtförmige Vertiefung 19 ist im unteren Teil mit einer kammerförmigen Erweiterung 21 versehen, die der Aufnahme einer als Stellelement dienenden zweiten Kugel 14 dient, wobei diese zweite Kugel 14 bei gesetztem Tastelement senkrecht unterhalb der ersten Kugel 2 liegt, und wobei die zweite Kugel 14 bei gelöschtem Tastelement seitlich unterhalb der ersten Kugel 2 in die kammerförmige Erweiterung 21 zu liegen kommt. Die Setzung des Tastelementes bzw. der ersten Kugel 2 erfolgt hier durch Verschieben der zweiten Kugel 14 mittels eines kammförmigen Schiebers 22 aus der kammerförmigen Erweiterung 21 durch einen Hubmagnet 5; die erste Kugel 2 wird durch die zweite Kugel 14 angehoben. Durch einen beweglichen Polschuh 23 der seitlich in die kammerförmige Erweiterung 21 hineinbewgbar ist wird beim Löschen des Tastelementes die zweite Kugel 14 abgestoßen und gleitet seitlich unterhalb der ersten Kugel 2 in die kammerförmige Erweiterung 21. Der bewegliche Polschuh 23 bekommt seine Erregung über einen Einzelelektromagnet 6 (Fig. 1) in der Schlitteneinrichtung 7. Hier erfolgt das Setzen der Tastelemente einer ganzen Matrixspalte mittels des kammförmigen Schiebers 22 und das Löschen der Tastelemente individuell über die Einzelelektromagnete 6. In vorteilhafter Weise dient diese Ausführungsform dafür, wenn eine überwiegende Anzahl von Tastelementen zu setzen ist. Bei entsprechend anderer Lage des Polschuhs 23 ist es jedoch nicht erforderlich diesen beweglich auszuführen; die zweite Kugel 14 wird dann mittels Magnetkraft in die Löschstellung befördert.

Jede Bohrung-Kugel-Kombination ist eine in sich abgeschlossene Einheit, stellt einen tastbaren Punkt des Braille-Zeichens dar, und ist einzeln ansteuerbar. Durch beliebige Anzahl und Anordnung solcher Einheiten können sowohl Einzelzeichen, Zeilen als auch Punktreihen erstellt werden. Somit können Textzeilen, Bildgraphiken, nicht nur dargestellt sonder für Blinde tastbar gemacht werden.

Als punkterzeugende Elemente dienen Elektromagnete 6, die in beliebiger Anzahl ein- oder mehrreihig auf einer beweglichen Schlitteneinrichtung 7 montiert sind. Durch entsprechenden Antrieb mittels Schrittmotor 10 und Zahnriemen 9 werden die Einzelelektromagnete 6 unter jedem Tastelement nach bedarf positioniert. Die Funktion dieser Einheit wird nun als Einzelheit beschrieben.

Wird die Magnetspule kurzzeitig von Strom durchflossen (Impuls genügt) und somit ein Magnetfeld aufgebaut, wird ein Stellelement in Richtung Magnet angezogen. Die Tastkugel wird angehoben und ragt ca. 0,5 mm aus der Tastplatte heraus. Durch geeignete Werkstoffwahl von Tastkugel (Metall, korrosionsbeständig, antimagnetisch), Stellelement (Metall, magnetisch) und Tastplatte (Kunststoff) wird hohe Betriebssicherheit erreicht.

Durch den Einsatz weniger beweglicher Teile, wird einerseits geringe Stromaufnahme und andererseits eine wirtschaftliche Herstellung ermöglicht.

Eingesetzt kann dieses Display sowohl in stationären als auch in transportablen Geräten mit entsprechender Ansteuerungselektronik werden.


**Patentansprüche**

1. Blindenschrift-Ausgabegerät mit einem flächenhaften Darstellungsträger mit erhabenen Rasterpunkten, die von selektiv durch Öffnungen in der Oberfläche des Darstellungsträgers hindurchragenden Kugelkalotten gebildet werden, dadurch gekennzeichnet, daß in den flächenhaften Darstellungsträger (1) matrixförmig verteilt in schachtförmigen Vertiefungen (11, 19) und dort selektiv verschiebbar als Tastelement für die Rasterpunkte dienende erste Kugeln (2) unverlierbar eingebettet sind und die schachtförmigen Vertiefungen (11, 19) unterseitig mit je einer kammerförmigen Erweiterung (13, 21) für die Aufnahme je einer weiteren als Stellelement für jede erste Kugel (2) dienende zweite Kugel (14) aus weichmagnetischem Material vorgesehen sind, wobei die kammerförmigen Erweiterungen (13, 21) für stabile Lagen der zweiten Kugeln (14) bei angehobener sowie abgesenkter erster Kugel (2) ausgebildet sind, daß für jede zweite Kugel (14) eine Stelleinrichtung und für alle zweiten Kugeln (14) einer Matrixzeile eine Rückstelleinrichtung vorgesehen ist, daß als Stelleinrichtung unterhalb des flächenhaften Darstellungsträgers (1) samt den schacht- und kammerförmigen Kugelaufnahmeräumen mindestens eine in Matrixspaltenrichtung verschiebbare Schlitteneinrichtung (7), bestückt mit je einem Einzelelektromagneten (6) pro Zeilenelement, für mindestens eine Matrixzeile vorgesehen ist, und daß die jeweilige Steuerung der als Stellelement dienenden zweiten Kugel (14) vom einen Pol eines korrespondierenden Einzelelektromagneten (6) aus über jeweils eine als Polschuh (15, 23) ausgebildete Magnetbrücke erfolgt.

2. Blindenschrift-Ausgabegerät nach Anspruch 1, dadurch gekennzeichnet, daß die als Polschuh (23) ausgebildete Magnetbrücke beweglich gelagert ist.

3. Blindenschrift-Ausgabegerät nach Anspruch 1 oder 2, dadurch gekennzeichnet, daß als Schlittenantrieb ein Schrittmotor (10) mit Zahnriemen (9) dient.

4. Blindenschrift-Ausgabegerät nach Anspruch 1...3, dadurch gekennzeichnet, daß als Rückstelleinrichtung ein kammartiger Schieber (16) vorgesehen ist, mit dem die als Stellelement dienenden zweiten Kugeln (14) einer Matrixzeile mittels eines Hubmagnetes (5) rückstellbar sind.

5. Blindenschrift-Ausgabegerät nach Anspruch 1...4, dadurch gekennzeichnet, daß auf dem flächenhaften Darstellungsträger (1) durch einen Zwischenraum oder durch eine Tastleiste getrennt eine Editierzeile (3) vorgesehen ist, deren Tastelemente über die gemeinsame Schlitteneinrichtung (7) steuerbar sind.

6. Blindenschrift-Ausgabegerät nach Anspruch 1...5, dadurch gekennzeichnet, daß für die Editierzeile (3) eine fest angekoppelte Einzelelektromagnetzeile vorgesehen ist.

7. Blindenschrift-Ausgabegerät nach Anspruch 1...6, dadurch gekennzeichnet, daß als Editierzeile (3) im Sinne der Blindenschrift mehrere Matrixzeilen Verwendung finden.

8. Blindenschrift-Ausgabegerät nach Anspruch 1...7, dadurch gekennzeichnet, daß mindestens eine Führungsschiene (8) für die Schlitteneinrichtung (7) zur Schließung des magnetischen Kreises dient.

9. Blindenschrift-Ausgabegerät nach Anspruch 1...8, dadurch gekennzeichnet, daß die steuernden Einzelelektromagnete (6) in der Schlitteneinrichtung (7) für eine Rasteränderung einsteckbar ausgeführt sind.

10. Blindenschrift-Ausgabegerät nach Anspruch 1...9, dadurch gekennzeichnet, daß Stellglied und Rückstellglied in ihrer Funktion vertauschbar sind, wobei durch den kammförmigen Schieber (21) ein Setzen aller und durch die Einzelelektromagnete (6) ein Rücksetzen der schrift- bzw. bildbedingten ersten Kugeln (2) erfolgt.

**Claims**

1. An output device for Braille having a display surface in which raised grid points are formed by segments of spheres projecting selectively through openings in the surface, characterised in that first spheres (2) serving as tactile elements for the grid points are distributed in a matrix pattern over the display surface (1), wherein they are embedded in a captive and selectively displaceable manner in shaft-like depressions (11, 19), the lower part of each of the shaft-like depressions (11, 19) being provided with a chamber-like widening (13, 21) to receive a second sphere (14) of soft magnetic material serving as a positioning element for each respective first sphere (2), the chamber-like widenings (13, 21) being shaped to provide stable positions for the second spheres (14) both when the first sphere (2) is raised and when it is lowered, in that positioning means is provided for each second sphere (14) and return means is provided for all the second spheres (14) of a matrix row, in that said positioning means comprises at least one slide arrangement (7) displaceable in the direction of the matrix column and fitted with an individual electromagnet (6) for each row element for at least one matrix row, arranged beneath the display surface (1) and the shaft- and chamber-like sphere receiving chambers, and in that in each case the second sphere (14) serving as the positioning element is controlled from a pole of a corresponding individual electromagnet (6) through a respective magnetic bridge formed as a pole shoe (15, 23).

2. An output device for Braille according to claim 1, characterised in that the magnetic bridge formed as a pole shoe (23) is movably mounted.

3. An output device for Braille according to claim 1 or claim 2, characterised in that a stepping motor (10) with a toothed belt (9) serves to drive the slide arrangement.

4. An output device for Braille according to any one of claims 1 to 3, characterised in that as return means a comb-like pusher (16) is provided with which the second spheres (14) of a matrix row which serve as positioning elements can be repositioned by means of a lifting magnet (5).

5. An output device for Braille according to any one of claims 1 to 4, characterised in that on the display surface (1), but separated by an intermediate space or by a touch rail, there is an editing row (3) whose tactile elements can be controlled by the common slide arrangement (7).

6. An output device for Braille according to any one of claims 1 to 5, characterised in that a row of permanently connected individual electromagnets is provided for the editing row (3).

7. An output device for Braille according to any one of claims 1 to 6, characterised in that the editing row (3) comprises a plurality of matrix rows used in accordance with the Braille script.

8. An output device for Braille according to any one of claims 1 to 7, characterised in that at least one guide rail (8) for the slide arrangement (7) serves to close the magnetic circuit.

9. An output device for Braille according to any one of claims 1 - 8, characterised in that the individual control electromagnets (6) can be plugged into the slide arrangement (7) for alterations to the grid.

10. An output device for Braille according to any one of claims 1 - 9, characterised in that the positioning member and return member can interchange their functions so that all the first spheres (2) can be positioned by means of the comb-like pusher (21) and individual first spheres (2) can be reset by means of the individual electromagnets (6) as required by the script and/or the picture.

## Revendications

1. Unité de sortie pour écriture Braille, avec un support de représentation à surface plane à points de trame saillants qui sont formés par des calottes sphériques qui passent sélectivement par des ouvertures ménagées dans la surface de support de représentation, caractérisée par le fait que dans le support de représentation à surface plane (1) sont logées de façon imperdable, suivant une répartition matricielle, dans des dépressions en forme de puits (11, 19), des premières billes (2) qui sont déplaçables sélectivement pour former des éléments tactiles pour les points de trame, alors que chacune des dépressions (11, 19) en forme de puits est pourvue dans le fond d'un élargissement (13, 21) en forme de chambre pour recevoir une seconde bille (14) en un matériau magnétique mou servant d'élément de positionnement pour la première bille associée (2), et que les élargissements (13, 21) en forme de chambre sont réalisés pour assurer des positions stables des secondes billes (14) lorsque la première bille est en position soulevée ou abaissée, qu'il est prévu pour chaque seconde bille (14) un dispositif de positionnement et pour toutes les secondes billes (14) des lignes matricielles, un dispositif de rappel, qu'il est prévu, en tant que dispositif de positionnement, en-dessous du support de représentation (1) de forme plane et des chambres de réception des lignes, en forme de puits et de chambres, au moins un dispositif à chariot (7) déplaçable dans la direction des colonnes matricielles, et dont chacun comporte un électroaimant individuel (6) par élément de ligne, pour au moins une ligne de matrice, et que la commande de la seconde ligne (14) qui sert d'élément de positionnement a lieu à partir d'un pôle d'un électroaimant individuel correspondant (6) et par l'intermédiaire d'un pont magnétique réalisé sous la forme d'une pièce polaire (15, 23)

2. Unité de sortie pour écriture Braille selon la revendication 1, caractérisée par le fait que le pont magnétique qui est réalisé sous la forme d'une pièce polaire (23), est monté de façon à être mobile.

3. Unité de sortie pour écriture Braille selon la revendication 1 ou 2, caractérisée par le fait qu'un moteur pas-à-pas (10) avec une courroie dentée (9) sert d'entraînement pour le chariot.

4. Unité de sortie pour écriture Braille selon la revendication 1...3, caractérisée par le fait qu'il est prévu, en tant que dispositif de renvoi, un coulisseau (16) en forme de peigne, avec lequel les secondes billes (14) d'une ligne de matrice et qui servent d'éléments de positionnement, sont susceptibles d'être renvoyées dans leur position initiale à l'aide d'un électroaimant de levage (5).

5. Unité de sortie pour écriture Braille selon la revendication 1...4, caractérisée par le fait que sur le support de représentation (1) à surface plane est prévue une ligne d'édition (3) séparée par un intervalle ou par une barrette tactile, les éléments tactiles de la ligne d'édition étant susceptibles d'être commandés par l'intermédiaire du dispositif à chariot commun (7)

6. Unité de sortie pour écriture Braille selon la revendication 1...5, caractérisée par le fait qu'il est prévu pour la ligne d'édition (3) une ligne d'électroaimant individuel le accouplée de façon fixe.

7. Unité de sortie pour écriture Braille selon la revendication 1...6, caractérisée par le fait que l'on utilise, en tant que ligne d'édition (3), dans le sens de l'écriture Braille, plusieurs lignes matricielles.

8. Unité de sortie pour écriture Braille selon la revendication 1...7, caractérisée par le fait qu au moins un rail de guidage (8) pour le dispositif à chariot (7), sert à la fermeture du circuit magnétique.

9. Unité de sortie pour écriture Braille selon la revendication 1...8, caractérisée par le fait que les électroaimants individuels de commande (6) sont susceptibles d'être enfichés dans le dispositif à chariot (7) pour une modification de la trame.

10. Unité de sortie pour écriture Braille selon la revendication 1...9, caractérisée par le fait que l'organe de positionnement et l'organe de rappel sont échangeables du point de vue de leur fonction, étant noté qu'à l'aide du coulisseau (21) et qu'à l'aide des électroaimants individuels (6) on peut procéder, respectivement à un positionnement de toutes les billes et à un renvoi de toutes les premières billes qui servent à réaliser ou à former l'écriture ou l'image.

FIG 1

FIG 2

FIG 3

FIG 4